# EUROPEAN PATENT APPLICATION

(11) **EP 3 339 096 A1**
(43) Date of publication of application: **27.06.2018**
(21) Application number: 16465561.5
(22) Date of filing: 20.12.2016
(51) Int. Cl.: B60Q 3/80, B60Q 3/20, B60Q 3/74, B60Q 3/18, B60Q 3/12

(54) **METHOD AND DEVICE FOR CONTROLLING A LAMP FOR AMBIENT LIGHT IN AN INTERIOR SPACE OF A VEHICLE**

(71) Applicant: Continental Automotive GmbH, 30165 Hannover (DE)
(72) Inventor: Mioc, Romulus Lucian, 300323 Timisoara (RO)

(57) **Abstract**

The invention relates to a method for controlling a lamp (40) for ambient light in an interior space of a vehicle, wherein an intensity of the ambient light is adjusted dependent on an intensity of light striking on a front of the vehicle such that the intensity of the ambient light increases when the intensity of the light striking on the front of the vehicle increases. The invention relates further to a corresponding device (10) for controlling a lamp (40) for ambient light in an interior space of a vehicle.

## Description

The present invention relates to a method and device for controlling a lamp for ambient light in an interior space of a vehicle. Further, the invention relates to a vehicle equipped with such a device.

In modern passenger cars and lorries, a lamp for ambient light in an interior space of the vehicle typically is controlled such that the ambient light turns on when the vehicle is unlocked or at least one of the vehicle's doors is opened, and is turned off when the vehicle is locked or all doors of the vehicle are closed. Such an automatic switching on and switching off is often implemented as a gradual change of the light intensity from zero to a maximum value, or vice versa, respectively.

Apart from such automatic operation mode, in such vehicles often exist the possibility to permanently turn on or permanently turn off the lamp for ambient light in the interior space by a manual operation of a respective switch.

The ambient light in the interior space of vehicles according to the prior art solely serves the purpose of providing an illumination of the interior space facilitating a visual orientation of the driver and/or passengers in the vehicle, especially when such persons are entering or exiting the vehicle.

It is an object of the present invention to enhance the usefulness of an ambient light in an interior space of a vehicle.

In an aspect of the invention, a method for controlling a lamp for ambient light in an interior space of a vehicle is provided, wherein an intensity of the ambient light is adjusted dependent on an intensity of light striking on a front of the vehicle such that the intensity of the ambient light increases when the intensity of the light striking on the front of the vehicle increases.

In a further aspect of the invention, a device for controlling a lamp for ambient light in an interior space of a vehicle is provided, wherein the device is configured to adjust an intensity of the ambient light dependent on an intensity of light striking on a front of the vehicle such that the intensity of the ambient light increases when the intensity of the light striking on the front of the vehicle increases.

To this end, a control mode may be provided for the method and the device, respectively, in which the intensity of the ambient light is adjusted dependent on the intensity of the light striking on the front of the vehicle such that the intensity of the ambient light increases when the intensity of the light striking on the front of the vehicle increases.

This control mode may be provided e.g. in addition to the already known manual operation modes, in which the ambient light is permanently turned on or permanently turned off, and/or in addition to the known automatic operation mode, in which a turning on/off is dependent on the state (open or closed) of the vehicle's doors or a state (locked or unlocked) of a central locking system of the vehicle, respectively.

Increasing the intensity of the ambient light when the intensity of the light striking on the front of the vehicle increases may advantageously improve the visual receptivity of the driver of the vehicle with regard to traffic events in front of the vehicle, in particular when driving the vehicle in darkness (e.g. at night). Especially when driving in darkness, the light of headlamps of oncoming vehicles or of rear lamps of preceding vehicles may cause that the eyes of the driver get tired or the driver gets blinded, so that the driver cannot see well the driving lane or obstacles.

According to the aspects of the invention mentioned above, however, such problems may be mitigated by means of a suitable adjustment of the intensity of the ambient light.

In an embodiment of the invention, the intensity of the light striking on the front of the vehicle is detected by means of a light sensor having a directivity for selectively detecting the light of headlamps of oncoming vehicles or rear lamps of preceding vehicles.

In a further development of this embodiment, the light sensor is additionally used as a so-called "high to low beam sensor" for initiating an automatic switching from high beam to low beam of a headlamp of the vehicle when the sensor detects the light of headlamps of oncoming vehicles or rear lamps of preceding vehicles. In particular modern passenger cars or lorries often are equipped with such high to low beam sensors, so that in these cases the invention can be realized e.g. without an additional light sensor.

In a further embodiment of the invention, for example the control mode may provide an automatic turning on of the ambient light when another (oncoming or preceding) vehicle is detected to approach the vehicle from the front, wherein this detection may e.g. rely on the fact that in this case the light detected by the light sensor exceeds a predetermined (e.g. fixedly predetermined) intensity.

In an embodiment, such automatic turning on of the ambient light is supressed when an ambient light level in a surrounding of the vehicle exceeds a predetermined (e.g. fixedly predetermined) threshold value, so that the automatic turning on is e.g. supressed when the vehicle is driving in daylight.

In an embodiment, for example the control mode provides an automatic turning on of the ambient light when another vehicle is detected to approach from the front, wherein the intensity of the ambient light is adjusted dependent on the intensity of the other vehicle's light such that an increase in the intensity of the other vehicle's light results in a corresponding increase of the intensity of the ambient light.

The adjustment of the ambient light intensity can comprise stepwise and/or continuous variations of the intensity.

In an embodiment of the invention, variations of the intensity (caused by variations of the striking light) are smoothed in order to avoid very rapid variations of the ambient light intensity. To this end, there may be provided a time constant (e.g. approx. 1 second) within which the intensity of the ambient light is varied to equal a target value of this intensity. Alternatively or in addition, there may also be provided e.g. a moving average time constant (e.g. 1 second or shorter) in the detection of the striking light intensity in order to avoid strong variations of the ambient light intensity as a result of very short-term variations of the striking light intensity.

In an embodiment of the invention, the intensity of the ambient light is adjusted further dependent on a rainfall intensity in a surrounding of the vehicle.

In particular, for example the control mode may provide that an automatic turning on of the ambient light when another vehicle is detected to approach from the front is supressed when a detected rainfall intensity in a surrounding of the vehicle is below a predetermined threshold value.

Alternatively or in addition, it may be provided that the rainfall intensity influences the dependency of the ambient light intensity on the intensity of the light striking on the front of the vehicle.

For example, in particular the control mode may provide that for a given increase of the intensity of the light striking on the front of the vehicle a resulting increase of the ambient light intensity is higher when rainfall is detected in comparison with the case in which no rainfall is detected.

In an embodiment of the invention, the control mode takes at least one further factor into account when adjusting the ambient light intensity. Such a factor may be e.g. a detection result achieved by any other detection means of the vehicle for detecting other vehicles approaching from the front (e.g. radar device and/or night vision device etc.).

For example, the detection result of such other detection means may influence a triggering of an automatic turning on or automatic turning off of the ambient light and/or the dependency of the ambient light intensity on the intensity of the light striking on the front of the vehicle.

In an embodiment, the device for controlling a lamp for ambient light in an interior space of a vehicle comprises a light sensor for detecting an intensity of light striking on a front of the vehicle, and a control unit for controlling the lamp dependent on the detected intensity of light striking on the front of the vehicle.

According to a preferred embodiment, this special controlling or this "control mode", respectively, takes place only when a predetermined activation criterion is fulfilled.

In an embodiment, the device further comprises a rain sensor for detecting a rainfall intensity in a surrounding of the vehicle or any other means suitable for detecting rainfall at the location of the vehicle.

Moreover, the device for controlling a lamp for ambient light in an interior space of a vehicle can be configured for realizing one or more of the functional details or embodiments, respectively, of the method according to the invention. This can involve e.g. a corresponding configuration of the above mentioned control unit and/or a corresponding provision of suitable additional means as e.g. a rain sensor, a radar device etc.

In particular, the device may comprise a light sensor having a directivity for selectively detecting the light of headlamps of oncoming vehicles or rear lamps of preceding vehicles.

Moreover, the device may further be configured to adjust the intensity of the ambient light dependent on a rainfall intensity in a surrounding of the vehicle.

The device may further be configured to automatically turn on the ambient light when another vehicle is detected to approach the vehicle from the front.

In an embodiment, the device is further configured to supress the automatic turning on of the ambient light when an ambient light level in a surrounding of the vehicle exceeds a predetermined threshold value.

The device may further be configured to supress the automatic turning on of the ambient light when a detected rainfall intensity in a surrounding of the vehicle is below a predetermined threshold value.

According to another aspect of the invention, a vehicle is provided, which comprises a lamp for ambient light in an interior space of the vehicle and a device for controlling the lamp as described herein.

In an embodiment, the lamp is placed in the interior space behind a position of a driver of the vehicle.

In an embodiment, the lamp is placed on a roof of the interior space.

In an embodiment, the invention is used for controlling a lamp for ambient light in an interior space of a passenger car. Alternatively, the invention can be applied e.g. in a lorry.

The invention will now be described in more detail by way of example embodiments with reference to the accompanying drawings,
- Fig. 1: illustrates a block diagram of a device for controlling a lamp for ambient light in an interior space of a vehicle according to an embodiment,
- Fig. 2: illustrates an exemplary driver's view during a night drive of a vehicle without rainfall for a vehicle according to the prior art,
- Fig. 3: illustrates a view as illustrated in Fig. 2, but with rainfall,
- Fig. 4: illustrates a view as illustrated in Fig. 3, but for a vehicle equipped with a device according to the invention, and
- Fig. 5: is an exemplary illustration of an interior space of a vehicle according to an embodiment.

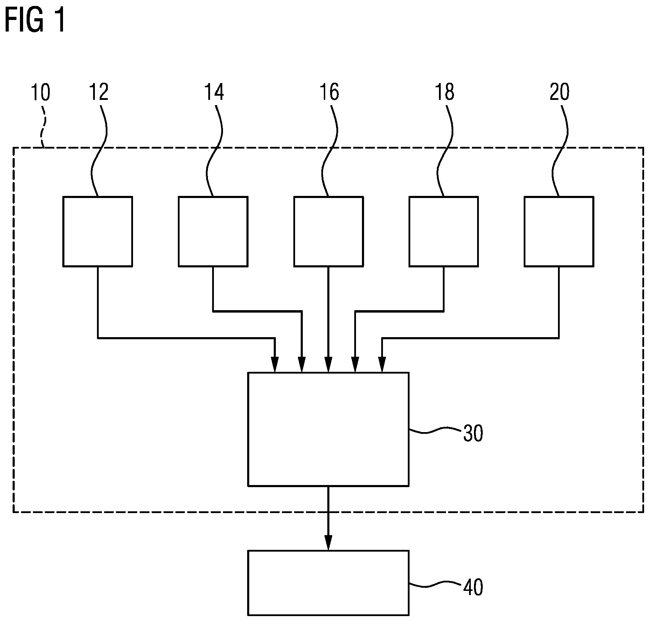

Fig. 1 illustrates a device 10 for controlling a lamp 40 for ambient light in an interior space of a vehicle, e.g. a passenger car or a lorry.

In the illustrated example, the device 10 comprises a door state sensor 12, a driving state sensor 14, a rain sensor 16, an ambient light sensor 18, a striking light sensor 20 and a control unit 30 receiving respective sensor signals from the sensors 12, 14, 16, 18, 20, and controlling the lamp 40.

The control unit 30 may e.g. be an electronic control unit (ECU) for providing further control functions in the respective vehicle so that the control unit 30 may receive sensor signals from additional sensors (not illustrated) and provide control signals for additional controllable devices (not illustrated).

In the illustrated example, the control unit 30 is implemented as a software-controlled device, e.g. a microcontroller, which is connected via a digital bus system to the sensors 12, 14, 16, 18, 20.

The door state sensor 12 provides a sensor signal representing the state (i.e. open or closed) of the doors of the vehicle. Alternatively or in addition, the sensor signal may represent a state (locked or released) of a central locking system of the vehicle.

The driving state sensor 14 provides a sensor signal representing the driving state of the vehicle. In the illustrated example, this sensor signal comprises the information whether the ignition is on or off, and an information about the speed of the vehicle.

The rain sensor 16 provides a sensor signal representing information about an intensity of rainfall at the location of the vehicle. The sensor 16 may e.g. be located at a windshield of the vehicle and may e.g. also be used for controlling a windscreen wiper (in an automatic control mode thereof).

The ambient light sensor 18 provides a sensor signal representing information about the intensity of ambient light in the environment of the vehicle. In particular, this sensor allows for detecting whether there is daylight or night. The sensor 18 may e.g. be located at a windshield of the vehicle, and may e.g. also be used for controlling headlamps and rear lamps of the vehicle (in an automatic control mode thereof).

The striking light sensor 20 provides a sensor signal representing an intensity of light striking on a front of the vehicle. This sensor 20 (contrary e.g. to the above mentioned ambient light sensor 18) has a pronounced directivity for selectively detecting the light of headlamps of oncoming vehicles or rear lamps of preceding vehicles. The sensor 20 may e.g. also be used for high to low beam control of headlamps of the vehicle (in an automatic control mode thereof).

Using the sensor signals from the door state sensor 12 and the driving state sensor 14, the control unit 30 provides a functionality, which is known from prior art vehicles. This conventional functionality safeguards that the lamp 40 is turned on when any of the vehicle's doors is opened or a central locking system is operated for unlocking the doors, wherein the lamp 40 may e.g. be turned off again when all doors are closed or the central locking system is operated for locking the doors.

In accordance with the present invention, the control unit 30 provides a control mode (at least in particular situations defined by an activation criterion), in which an intensity of the ambient light provided by the lamp 40 is adjusted dependent on an intensity of light striking on a front of a vehicle (as detected by the striking light sensor 20).

In this control mode, the intensity of the ambient light tends to increase when the intensity of the light striking on the front of the vehicle increases.

In the illustrated example, this control mode is activated only upon fulfilment of a particular activation criterion. There are several possibilities for defining a suitable criterion. In the illustrated example, the criterion is that all of the vehicle's doors are closed, the vehicle is driving (e.g. faster than a predetermined threshold velocity, e.g. lying in a range of 5 to 30 km/h), and the ambient light in the environment of the vehicle has a low level (e.g. below a fixedly predetermined threshold value). The fulfilment of this criterion may be checked by a corresponding analysis of the sensor signals received from the sensors 12, 14 and 18.

In an alternative embodiment, an activation of the control mode additionally necessitates that the intensity of rainfall in the surrounding of the vehicle exceeds a predetermined threshold value.

The described control mode in particular increases the comfort and safety when driving at night. In conventional vehicles, when driving at night and other vehicles are approaching from the front, the light emitted from the headlamps (or rear lamps) of these other vehicles stresses the eyes of the vehicle's driver, because it is very powerful compared to the light in the interior space of the vehicle. This light from other vehicles is often very disturbing, and the driver needs to concentrate due to the high difference of the lights' intensities.

In contrast, with the control mode according to the illustrated embodiment of the invention, in case of a high level of incoming light from other vehicles, the ambient light in the interior space of the vehicle is accordingly adjusted such that a difference between the intensity of the ambient light in the interior space of the vehicle and the intensity of the light striking on a front of a vehicle (and thus also entering through the windscreen) is advantageously decreased.

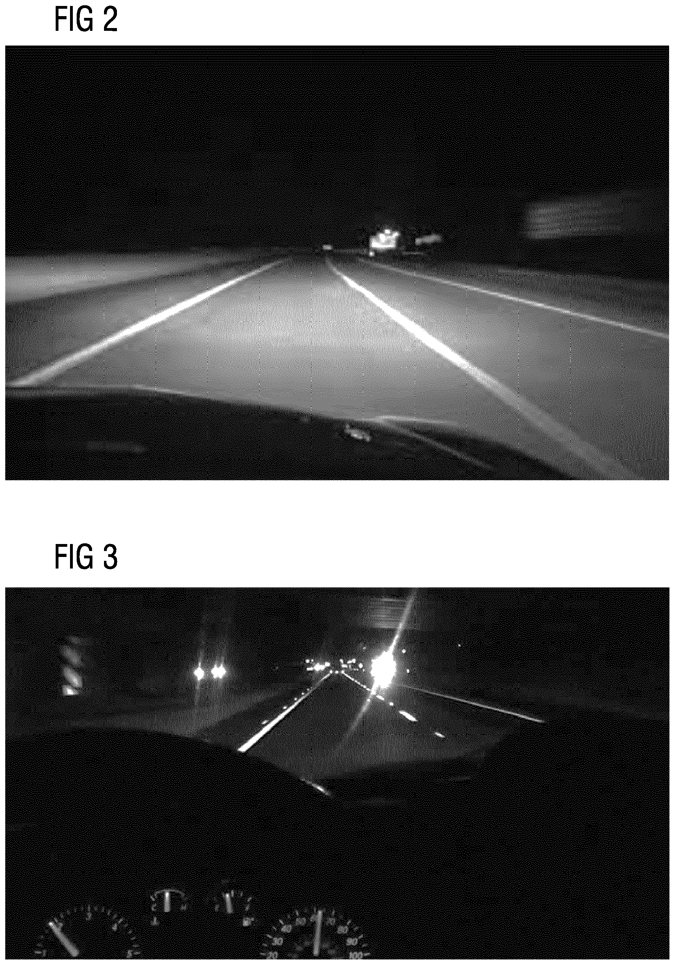

This advantage of the invention is further illustrated with reference to Figs. 2, 3 and 4.

Fig. 2 illustrates a driver's view when driving at night, without oncoming vehicles or preceding vehicles. In this situation, there is a good visibility of a driving lane in front of the vehicle, wherein conventional vehicles as well as the vehicle equipped with a controlling device according to the above described embodiment of the invention provide that the ambient light in the interior space is turned off in the illustrated situation.

Fig. 3 illustrates the driver's view at night, when it is raining and there are oncoming and preceding vehicles, so that there are many light reflections disturbing the driver. The view illustrated in Fig. 3 applies for conventional vehicles.

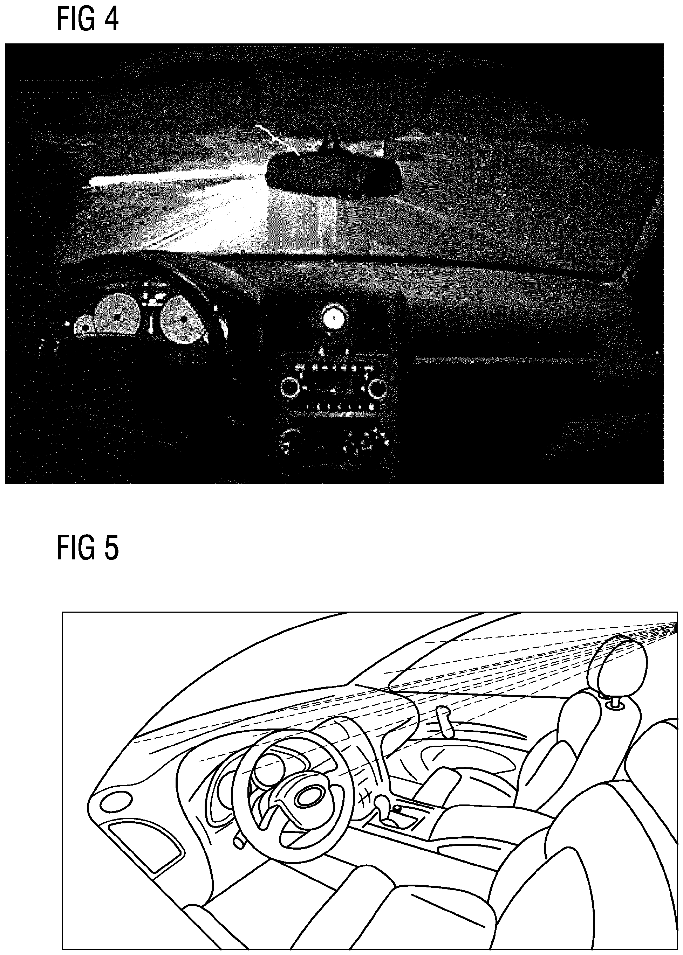

Fig. 4 illustrates the same situation as illustrated in Fig. 3, but with an activated control mode according to an embodiment of the present invention, in which the detected intensity of light striking on the front of the vehicle causes a corresponding intensity of the ambient light in the interior space of the vehicle such that a difference between the intensity of the interior light and the intensity of the light emitted by the other vehicles is decreased and the visibility of the traffic situation is improved.

Advantageously, the special ambient light functionality according to the invention may regulate the intensity of the ambient light in the interior space e.g. of a passenger car or lorry in order to make the dashboard more or less illuminated at night or darkness, so that the driver's eyes will get more used and the driver's pupil is already prepared to the following light striking on the front of the vehicle and this light will become less disturbing for the driver. This functionality is in particular useful in rainy weather conditions.

The lamp for ambient light in the interior space may be placed e.g. behind a driver's position and/or e.g. on a roof of the interior space.

Fig. 5 illustrates an effect of such a controlled or regulated illumination of the interior space of a passenger car, in particular of a dashboard of the car, during night drive.

### List of reference signs

- 10: controlling device
- 12: door state sensor
- 14: driving state sensor
- 16: rain sensor
- 18: ambient light sensor
- 20: striking light sensor
- 30: control unit
- 40: lamp for ambient light

## Claims

1. A method for controlling a lamp (40) for ambient light in an interior space of a vehicle, wherein an intensity of the ambient light is adjusted dependent on an intensity of light striking on a front of the vehicle such that the intensity of the ambient light increases when the intensity of the light striking on the front of the vehicle increases.

2. The method according to claim 1, wherein the intensity of the light striking on the front of the vehicle is detected by means of a light sensor (20) having a directivity for selectively detecting the light of headlamps of oncoming vehicles or rear lamps of preceding vehicles.

3. The method according to claim 1 or 2, wherein the intensity of the ambient light is adjusted further dependent on a rainfall intensity in a surrounding of the vehicle.

4. The method according to any of the preceding claims, wherein the ambient light is turned on automatically when another vehicle is detected to approach the vehicle from the front.

5. The method according to claim 4, wherein the automatic turning on of the ambient light is supressed when an ambient light level in a surrounding of the vehicle exceeds a predetermined threshold value.

6. The method according to claim 4 or 5, wherein the automatic turning on of the ambient light is supressed when a detected rainfall intensity in a surrounding of the vehicle is below a predetermined threshold value.

7. A device (10) for controlling a lamp (40) for ambient light in an interior space of a vehicle, wherein the device (10) is configured to adjust an intensity of the ambient light dependent on an intensity of light striking on a front of the vehicle such that the intensity of the ambient light increases when the intensity of the light striking on the front of the vehicle increases.

8. The device according to claim 7, wherein the device (10) comprises a light sensor (20) having a directivity for selectively detecting the light of headlamps of oncoming vehicles or rear lamps of preceding vehicles.

9. The device according to claim 7 or 8, wherein the device (10) is further configured to adjust the intensity of the ambient light dependent on a rainfall intensity in a surrounding of the vehicle.

10. The device according to any of claims 7 to 9, wherein the device (10) is further configured to automatically turn on the ambient light when another vehicle is detected to approach the vehicle from the front.

11. The device according to claim 10, wherein the device (10) is further configured to supress the automatic turning on of the ambient light when an ambient light level in a surrounding of the vehicle exceeds a predetermined threshold value.

12. The device according to claim 10 or 11, wherein the device (10) is further configured to supress the automatic turning on of the ambient light when a detected rainfall intensity in a surrounding of the vehicle is below a predetermined threshold value.

13. A vehicle comprising a lamp (40) for ambient light in an interior space of the vehicle and a device for controlling the lamp (40) according to any of claims 7 to 12.

14. The vehicle according to claim 13, wherein the lamp (40) is placed in the interior space behind a position of a driver of the vehicle.

15. The vehicle according to claim 13 or 14, wherein the lamp (40) is placed on a roof of the interior space.
